# EUROPEAN PATENT APPLICATION

(11) **EP 1 653 542 A1**
(43) Date of publication of application: **03.05.2006**
(21) Application number: 05020688.7
(22) Date of filing: 22.09.2005
(51) Int. Cl.: H01M 8/02

(54) **Fuel flow board structure for fuel cell**

(30) Priority: 19.10.2004 CN 200420117615
(71) Applicant: Antig Technology Co., Ltd., 114 Taipei (TW)
(72) Inventor: Shu, His-Ming, Hsin Chuang City Taipei County (TW); Huang, Wei-Li, GueiShan Tao Yuan County (TW)
(74) Representative: Viering, Jentschura & Partner

(57) **Abstract**

The present invention relates to an improvement of a fuel flow board structure for a fuel cell comprising a first substrate made of a material with good thermal conductivity and a second substrate made of a material with good adhesion connecting to the first substrate to become a one-piece structure.

## Description

### FIELD OF THE INVENTION

The present invention relates to a structure of flow layer in fuel cells, more particularly, to a fuel flow board applied to fuel cells adopting at least two materials.

### BACKGROUND OF THE INVENTION

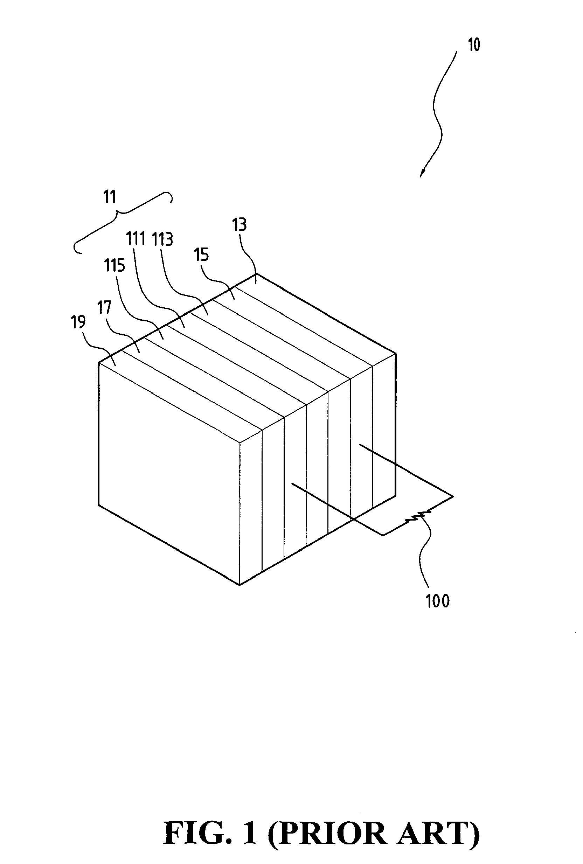

Fig. 1 illustrates the structure of a conventional layer lamination integrated fuel cell system. The layer lamination integrated fuel cell system 10 includes a fuel flow layer 13, a first power/signal transmission layer 15, an anode current collection layer 113, a membrane electrode assembly (MEA) layer 111, a cathode current collection layer 115, a second power/signal transmission layer 17, and an electromechanical control layer 19. The anode current collection layer 113, the MEA layer 111 and the cathode current collection layer 115 constitute a core component 11 of the fuel cell. Taking a direct methanol fuel cell (DMFC) system as an example of the layer lamination integrated fuel cell system 10, methanol solution passes to the core component 11 through the fuel flow layer 13, and initiates an anodic electrochemical reaction at the anode of the MEA layer 111 as follow:

CH₃OH + H₂O → 6H⁺ + 6e⁻ + CO₂

and a cathodic electrochemical reaction at the cathode of the MEA layer 111 as follow:

1.5O₂ + 6H⁺ + 6e⁻ → 3H₂O

Accordingly, electricity generated during an electrochemical reaction transforming chemical energy to low voltage DC power is supplied for a loading 100.

The fuel flow layer 13 in Fig. 1 is made of a printed circuit substrate or the like that has only one material. Such material, however, doesn't have a good heat-dissipating property intrinsically. As a result, each unit of the core component 11 has inconsistent temperature therein due to raised temperature induced by electrochemical reaction of anode fuel of the fuel flow layer 13. Consequently, due to the anode fuel with inconsistent temperature in the fuel flow layer 13, the core component 11 produces unstable DC voltages that affect the efficiency of transformation from chemical energy to electricity. Meanwhile, those units in the fuel cell have inconsistent durability and result in a shorter lifespan of the system 10 as a whole.

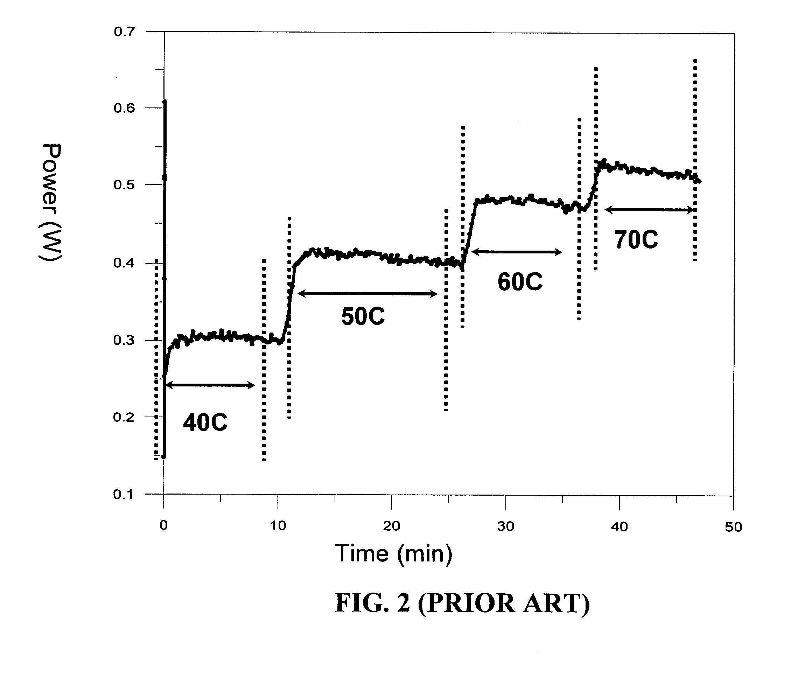

Fig. 2 is a diagram that shows the correlation between the temperature of anode fuel and power generated by a DMFC system, wherein x-axis represents measuring time and y-axis represents power. As illustrated in Fig.2, the DMFC system produces about 0.3 watts (W) at 40°C, about 0.4W at 50°C and about 0.45W at 60°C. It can be understood that the temperature of anode fuel is highly related to the degree of the electrochemical reaction. Hence, it is of great importance to make the temperature of fuel uniform, so as to perform a consistent degree of electrochemical reaction in each unit and generate regular power.

Therefore, a fuel flow board being able to maintain a uniform temperature distribution of the fuel in fuel cells is needed.

### SUMMARY OF INVENTION

It is a primary object of the invention to provide a fuel flow board structure for a fuel cell, which can prevent the fuel in fuel cells from inconsistent temperature distribution and eliminate negative effects on the efficiency of power generated thereof.

It is a secondary object of the invention to provide a fuel flow board structure for a fuel cell, which combines at least two different materials. Taking advantages of these materials, fuels in the fuel cell may have a uniform temperature distribution, and the fuel flow board may be closely connected to the current collection layers of the cell.

In accordance with the aforesaid objects of the invention, an improved fuel flow board structure for a fuel cell is provided. The structure comprises a first substrate made of a material with good thermal conductivity and a second substrate made of a material with good adhesion connecting to the first substrate to make a one-piece structure.

### BRIEF DESCRIPTION OF THE DRAWINGS

The foregoing aspects, as well as many of the attendant advantages and features of this invention will become more apparent by reference to the following detailed description, when taken in conjunction with the accompanying drawings, wherein:
Fig. 1 illustrates the structure of a conventional layer lamination integrated fuel cell system;
Fig. 2 is a diagram showing the correlation between temperature of anode fuel and power generated by a DMFC system;
Fig. 3 illustrates the structure of a fuel flow board according to one embodiment of the present invention; and
Fig. 4 illustrates the structure of a fuel flow board according to another embodiment of the present invention.

### DETAILED DESCRIPTION OF THE INVENTION

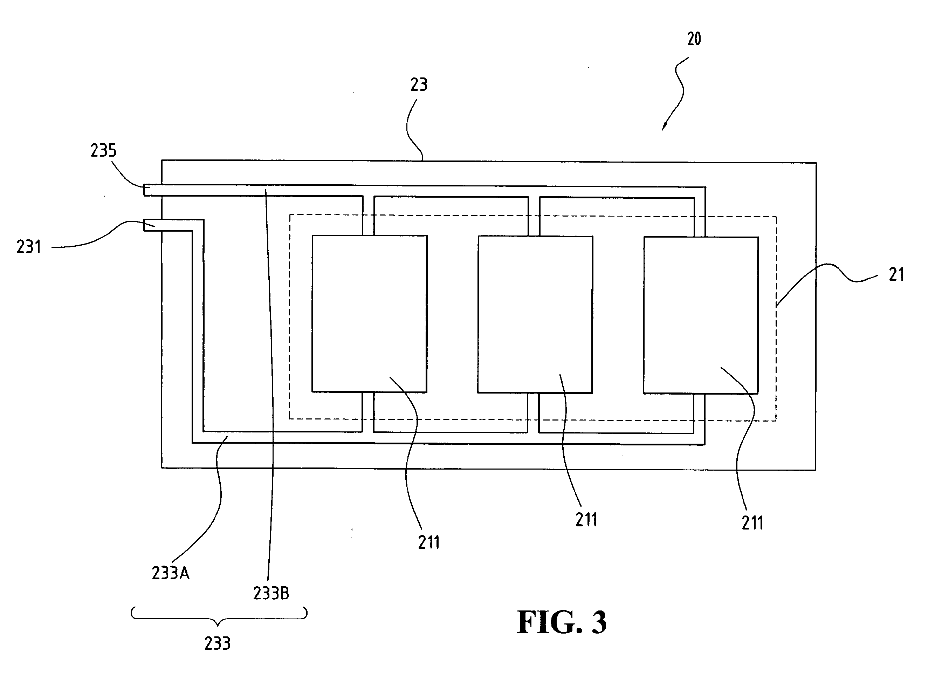

Fig. 3 illustrates the structure of a fuel flow board according to one embodiment of the invention. A fuel flow board 20 includes a first substrate 21 and a second substrate 23, which are described hereinafter respectively. The first substrate 21 is made of a material with good thermal conductivity, such as aluminum, copper, aluminum alloy, copper alloy, or other metals and alloys. The first substrate 21 has at least one concave portion 211 thereon, which is disposed corresponding to each unit of the fuel cell. Fuel flowing into the concave portion 211, e.g. methanol solution, hydrogen gas, anode fuel, and cathode fuel, thus has a uniform temperature distribution due to good heat conduction of the first substrate 21. The second substrate 23 is made of a material with good adhesion, for example, plastic. Also, the second substrate 23 is connected to the first substrate 21. From its appearance, the fuel flow board 20 represents a one-piece structure. Additionally, the fuel flow board 20 is closely connected to current collection layers by the second substrate 23 through its good adhesion.

The second substrate 23 includes an inlet 231, a flow channel 233 and an outlet 235, which are individually described as follow. The inlet 231 is used to inject fuel like methanol solution, hydrogen gas, anode fuel, cathode fuel, and so on, and is disposed at the side of the second substrate 23. The flow channel 233 serves to circulate fuels in the fuel flow board 20 through each fuel cell unit (not shown). The flow channel 233 is disposed on the surface of the second substrate 23 and connected to the inlet 231 and the outlet 235. In one embodiment, the flow channel 233 is in a form with plural trenches and set on the surface of the second substrate 23.

As shown in Fig. 3, the flow channel 233 may be in the form of a first channel 233A and a second channel 233B. Accordingly, fuel of the inlet 231 diverge from the first channel 233A to fuel cell units through each concave portion 211 and each fuel cell unit then generates electricity by electrochemical reaction. Fuel in the concave portion 211 and products of electrochemical reaction are drifted in the second channel 233B and drained out of the outlet 235.

Because the first substrate 21 of the fuel flow board 20 is made of a material having good heat-dissipating and heat-conducing properties and its thermal conductivity is better than conventional PCB or similar materials, the fuel flow board 20 does not influence temperature of fuel when heat is generated during an electrochemical reaction. In practical, fuel in the fuel flow board 20 remains in a consistent degree of temperature. Moreover, the surface of the first substrate 21 is treated to be acid-proof, so as to prevent it from the damages by fuels or products of electrochemical reaction. The treatment is performed by, for instance, coating Teflon on whole surfaces of the first substrate 21 such that the fuel flow board 20 is resistant to acids.

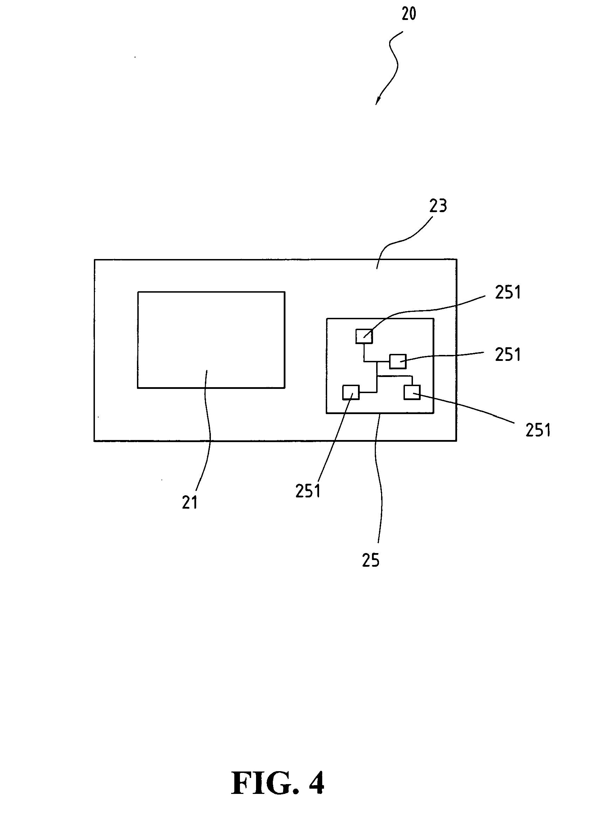

Furthermore, the fuel flow board 20 includes a third substrate 25 as illustrated in Fig. 4. The third substrate 25 adopts a printed circuit substrate, and is connected at least to the second substrate 23. From its appearance, the fuel flow board 20 of Fig. 4 represents an one-piece structure. The third substrate 25 has at least one electrical device 251 soldered thereon, and hence the fuel flow board 20 can provide electrical circuits.

The aforementioned fuel flow board 20 can be applied to a methanol fuel cell system or other fuel cell systems using gas or liquid fuel.

To sum up, the fuel flow board of the present invention possesses the advantages as follows:
1. The fuel flow board provides anode fuel or cathode fuel a uniform temperature distribution by means of materials with good thermal conductivity. Consequently, the efficiency of power generation in the system is increased, and the lifespan of fuel cell units are prolonged;
2. The fuel flow board has a better utility since it is closely connected to current collection layers through materials with good adhesion; and
3. It is feasible to form an intelligent fuel flow board by combining a printed circuit substrate having electrical circuits.

While the invention has been particularly shown and described with reference to the preferred embodiments thereof, these are, of course, merely examples to help clarify the invention and are not intended to limit the invention. It will be understood by those skilled in the art that various changes, modifications, and alterations in form and details may be made therein without departing from the spirit and scope of the invention, as set forth in the following claims.

## Claims

1. A fuel flow board structure for a fuel cell comprising:
a first substrate made of a material with good thermal conductivity; and
a second substrate made of a material with good adhesion, wherein said second substrate is connected to said first substrate, so as to form a one-piece fuel flow board.

2. The fuel flow board structure of claim 1, wherein said first substrate comprises at least one concave portion for containing a fuel.

3. The fuel flow board structure of claim 1, wherein the material of said first substrate is metal.

4. The fuel flow board structure of claim 1, wherein said second substrate comprises an inlet disposed at the side of said second substrate; and a flow channel disposed on said second substrate and connected to said inlet.

5. The fuel flow board structure of claim 1, wherein the material of said second substrate is plastic.

6. The fuel flow board structure of claim 4, wherein said first substrate comprises at least one concave portion connected to said flow channel.

7. The fuel flow board structure of claim 4, wherein said second substrate comprises an outlet disposed at the side of said second substrate and connected to said flow channel.

8. The fuel flow board structure of claim 3, wherein the metal is selected from a group consisting of aluminum, copper, aluminum alloy, and copper alloy.

9. The fuel flow board structure of claim 2, wherein the fuel is a methanol solution.

10. The fuel flow board structure of claim 2, wherein the fuel is a liquid fuel.

11. The fuel flow board structure of claim 2, wherein the fuel is a gas fuel.

12. The fuel flow board structure of claim 2, wherein the fuel is an anode fuel.

13. The fuel flow board structure of claim 2, wherein the fuel is a cathode fuel.

14. The fuel flow board structure of claim 1, wherein a surface of said first substrate is resistant to acid.

15. The fuel flow board structure of claim 14, wherein the surface of said first substrate is coated with Teflon.

16. The fuel flow board structure of claim 1, further comprising:
a third substrate made of a printed circuit substrate, wherein said third substrate is connected at least to said second substrate, so as to form a one-piece fuel flow board.

17. The fuel flow board structure of claim 16, wherein said third substrate comprises at least an electrical device soldered on it.
